# EUROPEAN PATENT APPLICATION

(11) **EP 4 290 733 A1**
(43) Date of publication of application: **13.12.2023**
(21) Application number: 23152992.6
(22) Date of filing: 24.01.2023
(51) Int. Cl.: H02J 7/00

(54) **INTELLIGENT BATTERY DISCHARGE CONTROLLING METHOD WITH LOAD BALANCING AND SYSTEM THEREOF**

(30) Priority: 07.06.2022 TW 111121095
(71) Applicant: Hyena Inc., Taichung City 408 (TW)
(72) Inventor: KO, Bo-Yan, 408 TAICHUNG CITY (TW)
(74) Representative: Deambrogi, Edgardo

(57) **Abstract**

An intelligent battery discharge controlling method with load balancing includes performing a controlling step. The controlling step includes configuring a control unit to obtain a plurality of battery conditions of a plurality of batteries and control discharging of the batteries according to the battery conditions, thereby causing the batteries to perform a load balancing operation. In response to determining that the battery conditions are different, the load balancing operation includes driving one of the batteries to discharge, and one of the battery conditions corresponding to the one of the batteries is better than another of the battery conditions corresponding to another of the batteries.

## Description

### BACKGROUND

### TECHNICAL FIELD

The present disclosure relates to a battery discharge controlling method and a system thereof. More particularly, the present disclosure relates to an intelligent battery discharge controlling method with load balancing and a system thereof.

### DESCRIPTION OF RELATED ART

Nowadays, electrical components are widely used in an application of an electrically assisted bicycle, such as a Battery Management System (BMS), a controller and a motor. In the conventional BMS, discharging of the batteries can be switched by the software. However, the batteries will be switched from one to another by the software after the one is discharged to empty. Hence, only a single battery is discharged, and two or more batteries cannot be discharged at the same time, so that the load cannot be effectively reduced. Furthermore, the conventional BMS cannot realize intelligent switching and discharging of the batteries according to the current battery conditions, so that it cannot balance the load. In the conventional BMS, the number of dischargings of the single battery is too large, thus early reaching the limit of the number of dischargings (e.g., the single battery is discharged plural times in three years) and then needing to early replace the single battery. Therefore, an intelligent battery discharge controlling method and a system thereof having the features of load balancing and prolonging the service life of the batteries are commercially desirable.

### SUMMARY

According to one aspect of the present disclosure, an intelligent battery discharge controlling method with load balancing includes performing a controlling step. The controlling step includes configuring a control unit to obtain a plurality of battery conditions of a plurality of batteries and control discharging of the batteries according to the battery conditions, thereby causing the batteries to perform a load balancing operation. In response to determining that the battery conditions are different, the load balancing operation includes driving one of the batteries to discharge, and one of the battery conditions corresponding to the one of the batteries is better than another of the battery conditions corresponding to another of the batteries.

According to one embodiment, in response to determining that the battery conditions are different, the load balancing operation further includes configuring the control unit to drive the one of the batteries to discharge for a period of time, and then detect the one of the batteries to obtain another battery condition. In response to determining that the another battery condition is the same as the another of the battery conditions, the load balancing operation further includes driving the batteries to discharge simultaneously. In response to determining that the another battery condition is better than the another of the battery conditions, the load balancing operation further includes maintaining the one of the batteries to discharge. In response to determining that the another battery condition is worse than the another of the battery conditions, the load balancing operation further includes switching the another of the batteries to discharge.

According to one embodiment, in response to determining that the battery conditions are the same as each other, the load balancing operation includes driving the batteries to discharge simultaneously.

According to one embodiment, in response to determining that the battery conditions are the same as each other, the controlling step further includes configuring the control unit to compare a maximum voltage and a minimum voltage of the batteries to obtain a comparison result, and then determine whether the batteries are discharged simultaneously according to the comparison result. The batteries include a battery having the maximum voltage. In response to determining that the comparison result is that in which a difference between the maximum voltage and the minimum voltage is smaller than a predetermined voltage range, the load balancing operation further includes driving the batteries to discharge simultaneously. In response to determining that the comparison result is that in which the difference between the maximum voltage and the minimum voltage is greater than or equal to the predetermined voltage range, the load balancing operation further includes driving the battery having the maximum voltage to discharge.

According to one embodiment, each of the battery conditions includes at least one of a State of Health (SOH), a State of Charge (SOC), a battery temperature and a number of chargings.

According to one embodiment, the batteries include at least one in-tube battery and at least one of at least one extender battery and at least one rear battery.

According to another aspect of the present disclosure, an intelligent battery discharge controlling system with load balancing includes a plurality of batteries and a control unit. The batteries have a plurality of battery conditions. The control unit is electrically connected to the batteries and obtains the battery conditions. The control unit controls discharging of the batteries according to the battery conditions, thereby causing the batteries to perform a load balancing operation. In response to determining that the battery conditions are different, the load balancing operation includes driving one of the batteries to discharge, and one of the battery conditions corresponding to the one of the batteries is better than another of the battery conditions corresponding to another of the batteries.

According to one embodiment, in response to determining that the battery conditions are different, the load balancing operation further includes configuring the control unit to drive the one of the batteries to discharge for a period of time, and then detect the one of the batteries to obtain another battery condition. In response to determining that the another battery condition is the same as the another of the battery conditions, the load balancing operation further includes driving the batteries to discharge simultaneously. In response to determining that the another battery condition is better than the another of the battery conditions, the load balancing operation further includes maintaining the one of the batteries to discharge. In response to determining that the another battery condition is worse than the another of the battery conditions, the load balancing operation further includes switching the another of the batteries to discharge.

According to one embodiment, in response to determining that the battery conditions are the same as each other, the load balancing operation includes driving the batteries to discharge simultaneously.

According to one embodiment, in response to determining that the battery conditions are the same as each other, the control unit is configured to compare a maximum voltage and a minimum voltage of the batteries to obtain a comparison result, and then determine whether the batteries are discharged simultaneously according to the comparison result. The batteries include a battery having the maximum voltage. In response to determining that the comparison result is that in which a difference between the maximum voltage and the minimum voltage is smaller than a predetermined voltage range, the load balancing operation further includes driving the batteries to discharge simultaneously. In response to determining that the comparison result is that in which the difference between the maximum voltage and the minimum voltage is greater than or equal to the predetermined voltage range, the load balancing operation further includes driving the battery having the maximum voltage to discharge.

According to one embodiment, each of the battery conditions includes at least one of a State of Health (SOH), a State of Charge (SOC), a battery temperature and a number of chargings.

According to one embodiment, the batteries include at least one in-tube battery and at least one of at least one extender battery and at least one rear battery.

According to one embodiment, the control unit and one of the at least one in-tube battery and the at least one of the at least one extender battery and the at least one rear battery are both disposed on a same circuit board.

### BRIEF DESCRIPTION OF THE DRAWINGS

The present disclosure can be more fully understood by reading the following detailed description of the embodiment, with reference made to the accompanying drawings as follows:
Fig. 1 shows a schematic view of an electrically assisted bicycle according to a first embodiment of the present disclosure.
Fig. 2 shows a schematic view of an intelligent battery discharge controlling system with load balancing according to a second embodiment of the present disclosure.
Fig. 3 shows a flow chart of an intelligent battery discharge controlling method with load balancing according to a third embodiment of the present disclosure.
Fig. 4 shows a flow chart of an intelligent battery discharge controlling method with load balancing according to a fourth embodiment of the present disclosure.
Fig. 5 shows a flow chart of an intelligent battery discharge controlling method with load balancing according to a fifth embodiment of the present disclosure.
Fig. 6 shows a schematic view of an electrically assisted bicycle according to a sixth embodiment of the present disclosure.
Fig. 7 shows a schematic view of an electrically assisted bicycle according to a seventh embodiment of the present disclosure.

### DETAILED DESCRIPTION

Embodiments of the present disclosure will be described with reference to the drawings. For clarity, some practical details will be described below. However, it should be noted that the present disclosure should not be limited by the practical details, that is, in some embodiments, the practical details are unnecessary. In addition, for simplifying the drawings, some conventional structures and elements will be simply illustrated, and repeated elements may be represented by the same reference numerals.

It will be understood that when an element (or device) is referred to as be "connected to" another element, it can be directly connected to the other element, or it can be indirectly connected to the other element, that is, intervening elements may be present. In contrast, when an element is referred to as be "directly connected to" another element, there are no intervening elements present. In addition, the terms first, second, third, etc. are used herein to describe various elements or components, and these elements or components should not be limited by these terms. Consequently, a first element or component discussed below could be termed a second element or component.

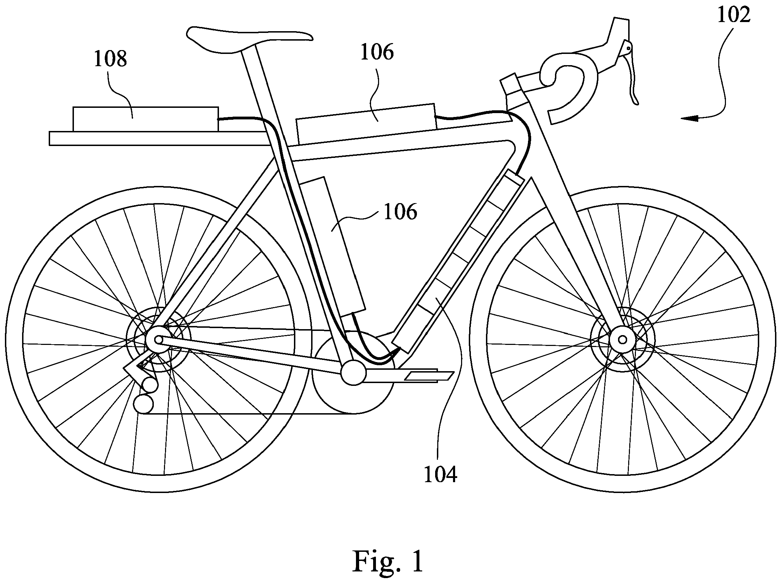

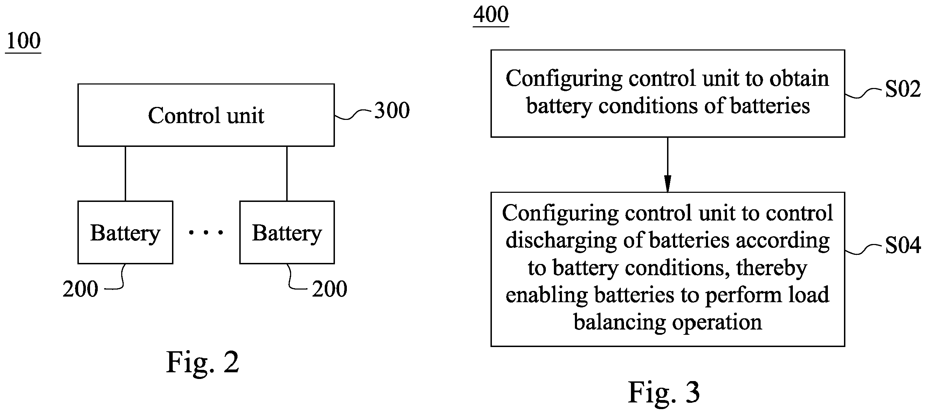

Reference is made to Figs. 1 and 2. Fig. 1 shows a schematic view of an electrically assisted bicycle 102 according to a first embodiment of the present disclosure. Fig. 2 shows a schematic view of an intelligent battery discharge controlling system 100 with load balancing according to a second embodiment of the present disclosure. The intelligent battery discharge controlling system 100 with load balancing may be disposed on the electrically assisted bicycle 102. The electrically assisted bicycle 102 includes a bicycle frame, an in-tube battery 104, at least one extender battery 106 and at least one rear battery 108. The in-tube battery 104, the at least one extender battery 106 and the at least one rear battery 108 are all disposed on the bicycle frame. In addition, the intelligent battery discharge controlling system 100 with load balancing includes a plurality of batteries 200 and a control unit 300. The batteries 200 have a plurality of battery conditions. The control unit 300 is electrically connected to the batteries 200 and obtains the battery conditions. The control unit 300 controls discharging of the batteries 200 according to the battery conditions, thereby causing the batteries 200 to perform a load balancing operation. In response to determining that the battery conditions are different, the load balancing operation includes driving one of the batteries 200 to discharge, and one of the battery conditions corresponding to the one of the batteries 200 is better than another of the battery conditions corresponding to another of the batteries 200. In one embodiment, the control unit 300 may be a Micro Controller Unit (MCU), a microprocessor or another computing processor, but the present disclosure is not limited thereto. Therefore, the intelligent battery discharge controlling system 100 with load balancing of the present disclosure can be applied to an electrically assisted bicycle (E-bike) and determine intelligent switching and discharging of the batteries 200 according to the battery conditions, so that the system can not only balance the load significantly (i.e., avoid repeatedly discharging a single battery 200 and early reaching of the limit of the number of dischargings), but also can reduce the load when discharging the batteries 200 simultaneously (i.e., the current will be shunted when discharging the batteries 200 simultaneously, so that the load of a single one of the batteries 200 can be reduced). In addition, the present disclosure can balance the battery conditions of the batteries 200 and prolong the service life of the batteries 200.

Reference is made to Figs. 1, 2 and 3. Fig. 3 shows a flow chart of an intelligent battery discharge controlling method 400 with load balancing according to a third embodiment of the present disclosure. The intelligent battery discharge controlling method 400 with load balancing includes performing a controlling step. The controlling step includes performing two steps S02, S04. The step S02 includes configuring a control unit 300 to obtain a plurality of battery conditions of a plurality of batteries 200. The step S04 includes configuring the control unit 300 to control discharging of the batteries 200 according to the battery conditions, thereby causing the batteries 200 to perform a load balancing operation. In response to determining that the battery conditions are different, the load balancing operation includes driving one of the batteries 200 to discharge, and one of the battery conditions corresponding to the one of the batteries 200 is better than another of the battery conditions corresponding to another of the batteries 200. In other words, the intelligent battery discharge controlling method 400 with load balancing of the present disclosure can drive the battery 200 having a better battery condition to discharge preferentially, thus balancing the load.

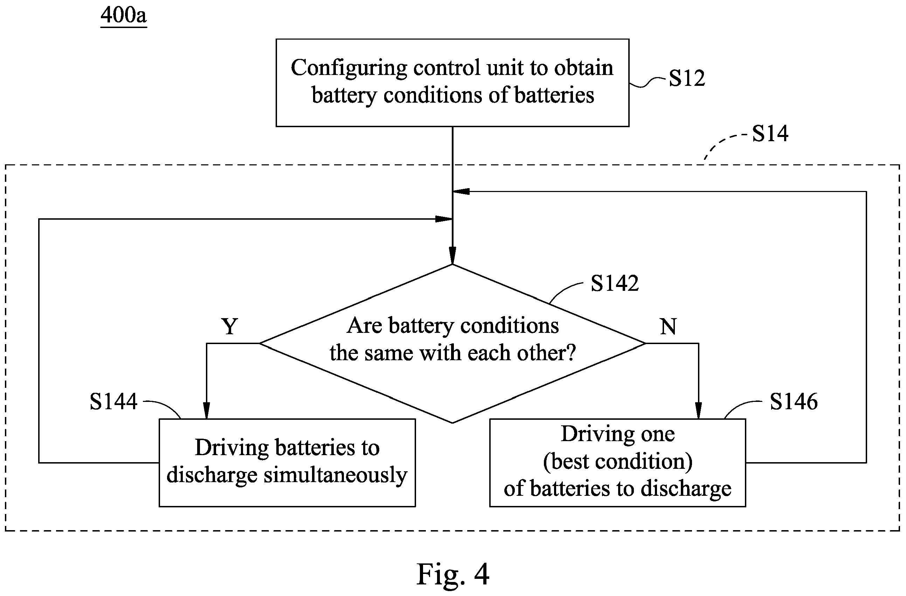

Reference is made to Figs. 1, 2 and 4. Fig. 4 shows a flow chart of an intelligent battery discharge controlling method 400a with load balancing according to a fourth embodiment of the present disclosure. The intelligent battery discharge controlling method 400a with load balancing includes performing a controlling step. The controlling step includes performing two steps S12, S14. The step S12 includes configuring a control unit 300 to obtain a plurality of battery conditions of a plurality of batteries 200. The step S14 includes configuring the control unit 300 to control discharging of the batteries 200 according to the battery conditions, thereby causing the batteries 200 to perform a load balancing operation.

The step S14 further includes a plurality of steps S142, S144, S146. The step S142 includes comparing whether the battery conditions of the batteries 200 are the same as each other. In response to determining that the battery conditions are the same as each other, the step S144 is performed. In response to determining that the battery conditions are different, the step S146 is performed. The step S 144 includes driving the batteries 200 to discharge simultaneously. The step S146 includes driving one of the batteries 200 to discharge.

In one example, it is assumed that the number of the batteries 200 and the number of the battery conditions are both two. The step S142 includes comparing whether the two battery conditions are the same as each other. In response to determining that one of the two battery conditions is the same as the other of the two battery conditions, the step S144 is performed and includes driving the two batteries 200 to discharge simultaneously. In response to determining that the one of the two battery conditions is different from the other of the two battery conditions, the step S146 is performed and includes driving one of the batteries 200 to discharge, i.e., selecting the one of the batteries 200 having a better battery condition to discharge.

In another example, it is assumed that the number of the batteries 200 and the number of the battery conditions are both greater than or equal to three. The step S142 includes comparing whether the battery conditions are the same as each other. In response to determining that the battery conditions are the same as each other, the step S144 is performed and includes driving the batteries 200 to discharge simultaneously. In response to determining that two of the battery conditions are different, the step S146 is performed and includes driving one of the batteries 200 to discharge, i.e., selecting the one of the batteries 200 having a better battery condition to discharge.

After the step S144 is performed, the step S 142 is repeatedly performed. In other words, in response to determining that the battery conditions are the same as each other, the load balancing operation further includes configuring the control unit 300 to drive the batteries 200 to discharge simultaneously for a period of time (i.e., the step S144 is performed for the period of time), and then detect all of the batteries 200 to obtain another battery condition of each of the batteries 200. Next, the step S142 (comparing whether the battery conditions are still the same as each other) is performed. The period of time may be from 1 minute to 10 minutes, but the present disclosure is not limited thereto.

After the step S146 is performed, the step S142 is repeatedly performed. In other words, in response to determining that the battery conditions are different (i.e., two of the battery conditions are different), the load balancing operation further includes configuring the control unit 300 to drive the one of the batteries 200 to discharge for a period of time (i.e., the step S146 is performed for the period of time), and then detect the one of the batteries 200 to obtain another battery condition. Next, the step S142 (comparing whether the battery conditions are still the same as each other) is performed. In response to determining that the another battery condition is the same as another of the battery conditions (corresponding to another of the batteries 200), the load balancing operation further includes driving the batteries 200 to discharge simultaneously. In response to determining that the another battery condition is better than the another of the battery conditions, the load balancing operation further includes maintaining the one of the batteries 200 to discharge. In response to determining that the another battery condition is worse than the another of the battery conditions, the load balancing operation further includes switching the another of the batteries 200 to discharge. For example, after a first battery 200 having a better initial battery condition is driven to discharge for the period of time, if the battery condition of the first battery 200 is worse than the battery condition of a second battery 200, the control unit 300 of the present disclosure can intelligently switch the second battery 200 to discharge via software.

Each of the battery conditions can include at least one of a State of Health (SOH), a State of Charge (SOC), a battery temperature and the number of chargings (or/and the number of dischargings). The batteries 200 include at least one in-tube battery 104, at least one extender battery 106 and at least one rear battery 108. In addition, the control unit 300 and one of the at least one in-tube battery 104, the at least one extender battery 106 and the at least one rear battery 108 are both disposed on a same circuit board. In one embodiment, the control unit 300 and the at least one in-tube battery 104 are both disposed on the same circuit board, but the present disclosure is not limited thereto.

Therefore, the intelligent battery discharge controlling method 400a with load balancing of the present disclosure can be applied to an electrically assisted bicycle and determine intelligent switching and discharging of the batteries 200 according to the battery conditions, so that the system can not only balance the load significantly (i.e., avoid repeatedly discharging of a single battery 200 and early reaching the limit of the number of dischargings), but also reduce the load when discharging the batteries 200 simultaneously (i.e., the current will be shunted when discharging the batteries 200 simultaneously, so that the load of the single battery 200 can be reduced). In addition, the present disclosure can balance the battery conditions of the batteries 200 and prolong the service life of the batteries 200.

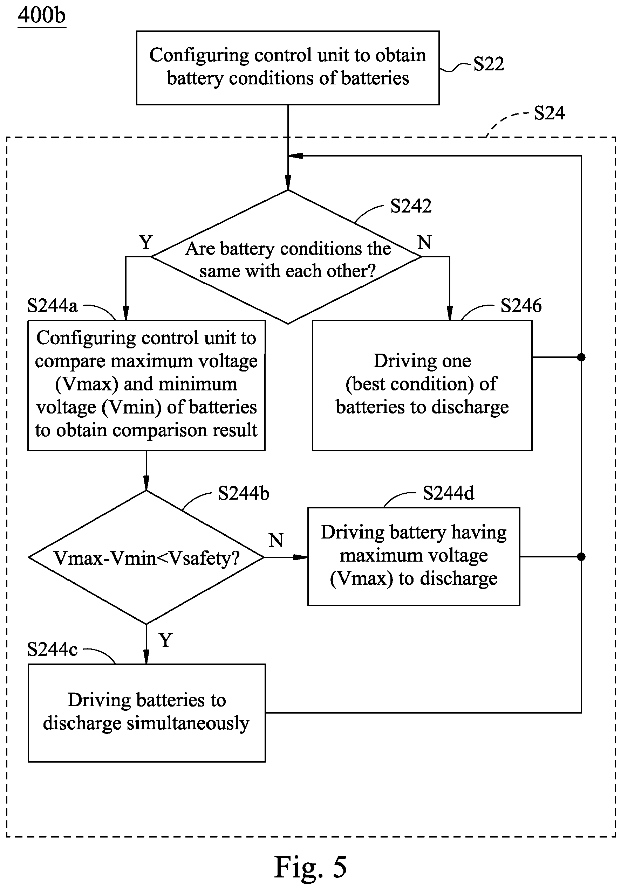

Reference is made to Figs. 1, 2 and 5. Fig. 5 shows a flow chart of an intelligent battery discharge controlling method 400b with load balancing according to a fifth embodiment of the present disclosure. The intelligent battery discharge controlling method 400b with load balancing includes performing a controlling step. The controlling step includes performing two steps S22, S24. The step S22 includes configuring a control unit 300 to obtain a plurality of battery conditions of a plurality of batteries 200. The step S24 includes configuring the control unit 300 to control discharging of the batteries 200 according to the battery conditions, thereby causing the batteries 200 to perform a load balancing operation.

The step S24 includes a plurality of steps S242, S244a, S244b, S244c, S244d, S246. The step S242 includes comparing whether the battery conditions of the batteries 200 are the same as each other. In response to determining that the battery conditions are the same as each other, the step S244a is performed. In response to determining that the battery conditions are different, the step S246 is performed. The step S244a includes configuring the control unit 300 to compare a maximum voltage Vmax and a minimum voltage Vmin of the batteries 200 to obtain a comparison result, and then determining whether the batteries 200 are discharged simultaneously according to the comparison result. The step S246 includes driving one of the batteries 200 to discharge. The step S246 is the same as the step S146 of Fig. 4, and will not be described again herein. In the step S244a, the batteries 200 include a battery having the maximum voltage Vmax. The step S244b includes confirming whether the comparison result is that in which a difference between the maximum voltage Vmax and the minimum voltage Vmin is smaller than a predetermined voltage range Vsafety (i.e., Vmax-Vmin<Vsafety?). The predetermined voltage range Vsafety may be 0.5 V, but the present disclosure is not limited thereto. In response to determining that the comparison result is that in which the difference between the maximum voltage Vmax and the minimum voltage Vmin is smaller than the predetermined voltage range Vsafety, the step S244c is performed. In response to determining that the comparison result is that in which the difference between the maximum voltage Vmax and the minimum voltage Vmin is greater than or equal to the predetermined voltage range Vsafety, the step S244d is performed. The step S244c includes performing the load balancing operation which further includes driving the batteries 200 to discharge simultaneously. The step S244d includes performing the load balancing operation which further includes driving the battery 200 having the maximum voltage Vmax to discharge.

Therefore, the intelligent battery discharge controlling method 400b with load balancing of the present disclosure can be applied to an electrically assisted bicycle and determine intelligent switching and discharging of the batteries 200 according to the battery conditions and the voltage difference (e.g., the difference between the maximum voltage Vmax and the minimum voltage Vmin), so that the system can not only balance the load significantly, but also reduce the load when discharging the batteries 200 simultaneously. In addition, the present disclosure can balance the battery conditions of the batteries 200 and prolong the service life of the batteries 200.

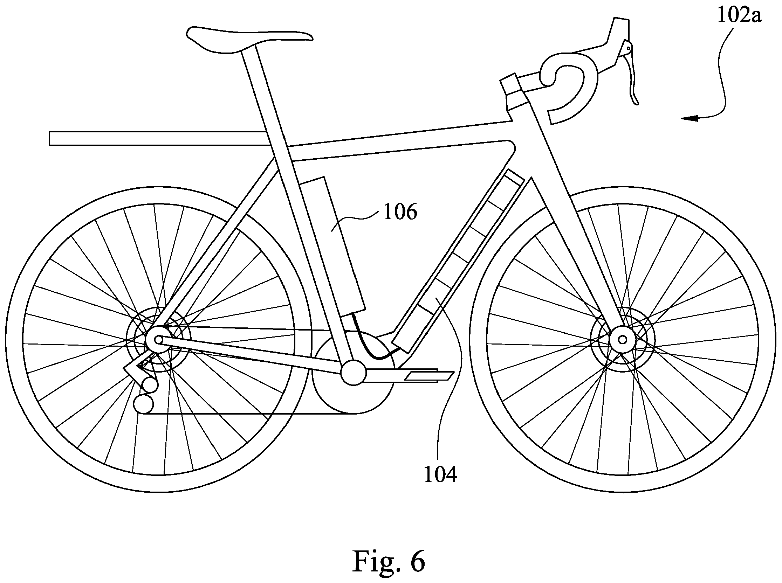

Reference is made to Figs. 2 and 6. Fig. 6 shows a schematic view of an electrically assisted bicycle 102a according to a sixth embodiment of the present disclosure. The intelligent battery discharge controlling system 100 with load balancing may be disposed on the electrically assisted bicycle 102a. The electrically assisted bicycle 102a includes a bicycle frame, an in-tube battery 104 and an extender battery 106. The in-tube battery 104 and the extender battery 106 are both disposed on the bicycle frame. In other words, the batteries 200 can include the in-tube battery 104 and the extender battery 106. In addition, the control unit 300 and one of the in-tube battery 104 and the extender battery 106 are both disposed on a same circuit board. In one embodiment, the control unit 300 and the in-tube battery 104 are both disposed on the same circuit board, but the present disclosure is not limited thereto.

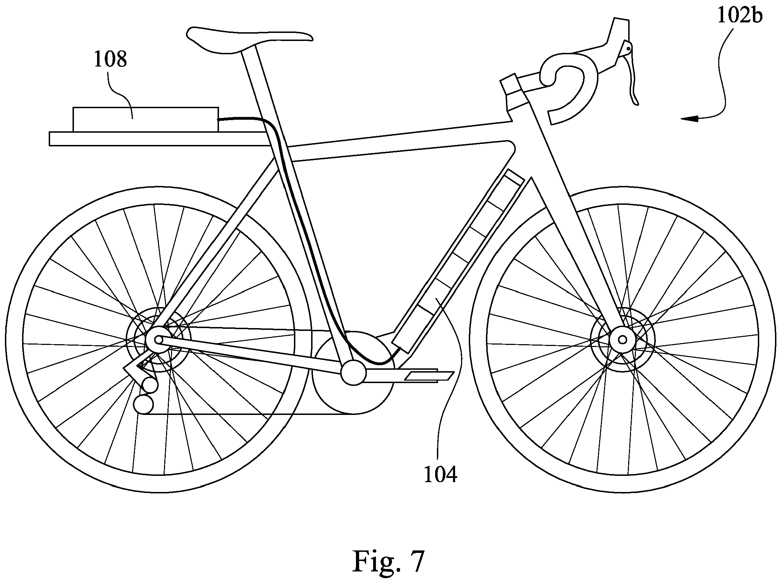

Reference is made to Figs. 2 and 7. Fig. 7 shows a schematic view of an electrically assisted bicycle 102b according to a seventh embodiment of the present disclosure. The intelligent battery discharge controlling system 100 with load balancing may be disposed on the electrically assisted bicycle 102b. The electrically assisted bicycle 102b includes a bicycle frame, an in-tube battery 104 and a rear battery 108. The in-tube battery 104 and the rear battery 108 are both disposed on the bicycle frame. In other words, the batteries 200 can include the in-tube battery 104 and the rear battery 108. In addition, the control unit 300 and one of the in-tube battery 104 and the rear battery 108 are both disposed on a same circuit board. In one embodiment, the control unit 300 and the in-tube battery 104 are both disposed on the same circuit board, but the present disclosure is not limited thereto.

According to the aforementioned embodiments and examples, the advantages of the present disclosure are described below.
1. The intelligent battery discharge controlling method with load balancing and the system thereof of the present disclosure can be applied to an electrically assisted bicycle and determine intelligent switching and discharging of the batteries according to the battery conditions, thus balancing the load significantly.
2. The intelligent battery discharge controlling method with load balancing and the system thereof of the present disclosure can reduce the load when discharging the batteries simultaneously so as to balance the battery conditions of the batteries and prolong the service life of the batteries.
3. Apart from the battery conditions, the voltage difference of the batteries can determine intelligent switching and discharging of the batteries to further optimize the service life of the batteries.

## Claims

1. An intelligent battery discharge controlling method (400, 400a, 400b) with load balancing, **characterized in** comprising:
performing a controlling step, wherein the controlling step comprises configuring a control unit (300) to obtain a plurality of battery conditions of a plurality of batteries (200) and control discharging of the batteries (200) according to the battery conditions, thereby causing the batteries (200) to perform a load balancing operation;
wherein in response to determining that the battery conditions are different, the load balancing operation comprises driving one of the batteries (200) to discharge, and one of the battery conditions corresponding to the one of the batteries (200) is better than another of the battery conditions corresponding to another of the batteries (200).

2. The intelligent battery discharge controlling method (400a) with load balancing of claim 1, wherein in response to determining that the battery conditions are different, the load balancing operation further comprises:
configuring the control unit (300) to drive the one of the batteries (200) to discharge for a period of time, and then detect the one of the batteries (200) to obtain another battery condition;
wherein in response to determining that the another battery condition is the same as the another of the battery conditions, the load balancing operation further comprises driving the batteries (200) to discharge simultaneously;
wherein in response to determining that the another battery condition is better than the another of the battery conditions, the load balancing operation further comprises maintaining the one of the batteries (200) to discharge;
wherein in response to determining that the another battery condition is worse than the another of the battery conditions, the load balancing operation further comprises switching the another of the batteries (200) to discharge.

3. The intelligent battery discharge controlling method (400a) with load balancing of any of claims 1-2, wherein in response to determining that the battery conditions are the same as each other, the load balancing operation comprises driving the batteries (200) to discharge simultaneously.

4. The intelligent battery discharge controlling method (400b) with load balancing of any of claims 1-3, wherein in response to determining that the battery conditions are the same as each other, the controlling step further comprises:
configuring the control unit (300) to compare a maximum voltage (Vmax) and a minimum voltage (Vmin) of the batteries (200) to obtain a comparison result, and then determine whether the batteries (200) are discharged simultaneously according to the comparison result;
wherein the batteries (200) comprise a battery having the maximum voltage (Vmax);
wherein in response to determining that the comparison result is that in which a difference between the maximum voltage (Vmax) and the minimum voltage (Vmin) is smaller than a predetermined voltage range (Vsafety), the load balancing operation further comprises driving the batteries (200) to discharge simultaneously;
wherein in response to determining that the comparison result is that in which the difference between the maximum voltage (Vmax) and the minimum voltage (Vmin) is greater than or equal to the predetermined voltage range (Vsafety), the load balancing operation further comprises driving the battery having the maximum voltage (Vmax) to discharge.

5. The intelligent battery discharge controlling method (400, 400a, 400b) with load balancing of any of claims 1-4, wherein each of the battery conditions comprises at least one of a State of Health (SOH), a State of Charge (SOC), a battery temperature and a number of chargings.

6. The intelligent battery discharge controlling method (400, 400a, 400b) with load balancing of any of claims 1-5, wherein the batteries (200) comprise at least one in-tube battery (104) and at least one of at least one extender battery (106) and at least one rear battery (108).

7. An intelligent battery discharge controlling system (100) with load balancing, **characterized in** comprising:
a plurality of batteries (200) having a plurality of battery conditions; and
a control unit (300) electrically connected to the batteries (200) and obtaining the battery conditions, wherein the control unit (300) controls discharging of the batteries (200) according to the battery conditions, thereby causing the batteries (200) to perform a load balancing operation;
wherein in response to determining that the battery conditions are different, the load balancing operation comprises driving one of the batteries (200) to discharge, and one of the battery conditions corresponding to the one of the batteries (200) is better than another of the battery conditions corresponding to another of the batteries (200).

8. The intelligent battery discharge controlling system (100) with load balancing of claim 7, wherein in response to determining that the battery conditions are different, the load balancing operation further comprises:
configuring the control unit (300) to drive the one of the batteries (200) to discharge for a period of time, and then detect the one of the batteries (200) to obtain another battery condition;
wherein in response to determining that the another battery condition is the same as the another of the battery conditions, the load balancing operation further comprises driving the batteries (200) to discharge simultaneously;
wherein in response to determining that the another battery condition is better than the another of the battery conditions, the load balancing operation further comprises maintaining the one of the batteries (200) to discharge;
wherein in response to determining that the another battery condition is worse than the another of the battery conditions, the load balancing operation further comprises switching the another of the batteries (200) to discharge.

9. The intelligent battery discharge controlling system (100) with load balancing of any of claims 7-8, wherein in response to determining that the battery conditions are the same as each other, the load balancing operation comprises driving the batteries (200) to discharge simultaneously.

10. The intelligent battery discharge controlling system (100) with load balancing of any of claims 7-9, wherein in response to determining that the battery conditions are the same as each other, the control unit (300) is configured to compare a maximum voltage (Vmax) and a minimum voltage (Vmin) of the batteries (200) to obtain a comparison result, and then determine whether the batteries (200) are discharged simultaneously according to the comparison result;
wherein the batteries (200) comprise a battery having the maximum voltage (Vmax);
wherein in response to determining that the comparison result is that in which a difference between the maximum voltage (Vmax) and the minimum voltage (Vmin) is smaller than a predetermined voltage range (Vsafety), the load balancing operation further comprises driving the batteries (200) to discharge simultaneously;
wherein in response to determining that the comparison result is that in which the difference between the maximum voltage (Vmax) and the minimum voltage (Vmin) is greater than or equal to the predetermined voltage range (Vsafety), the load balancing operation further comprises driving the battery having the maximum voltage (Vmax) to discharge.

11. The intelligent battery discharge controlling system (100) with load balancing of any of claims 7-10, wherein each of the battery conditions comprises at least one of a State of Health (SOH), a State of Charge (SOC), a battery temperature and a number of chargings.

12. The intelligent battery discharge controlling system (100) with load balancing of any of claims 7-11, wherein the batteries (200) comprise at least one in-tube battery (104) and at least one of at least one extender battery (106) and at least one rear battery (108).

13. The intelligent battery discharge controlling system (100) with load balancing of any of claims 7-12, wherein the control unit (300) and one of the at least one in-tube battery (104) and the at least one of the at least one extender battery (106) and the at least one rear battery (108) are both disposed on a same circuit board.
